# EUROPÄISCHE PATENTANMELDUNG

(11) **EP 3 118 593 A1**
(43) Veröffentlichungstag der Anmeldung: **18.01.2017**
(21) Anmeldenummer: 15177320.7
(22) Anmeldetag: 17.07.2015
(51) Int. Cl.: G01H 13/00, B23Q 17/12, G01H 1/00

(54) **VERFAHREN UND ERKENNUNGSSYSTEM ZUR ERKENNUNG VON SELBSTERREGTEN SCHWINGUNGEN**

(71) Anmelder: Siemens Aktiengesellschaft, 80333 München (DE)
(72) Erfinder: BITTEROLF, David, 91056 Erlangen (DE); BRETSCHNEIDER, Jochen, 73732 Esslingen (DE); SIEGEL, Philipp, 08064 Zwickau (DE)

(57) **Zusammenfassung**

Die Erfindung betrifft ein Verfahren zur Erkennung von selbsterregten Schwingungen von trennenden, insbesondere spanenden Werkzeugmaschinen und/oder des Werkzeuges und/oder des durch die Werkzeugmaschine bearbeiteten Werkstücks mit folgenden Schritten:
- Erfassen eines bei der Bearbeitung des Werkstücks durch die Werkzeugmaschine auftretenden physikalischen Größe, insbesondere eines Messsignals (1),
- Bildung eines Referenzsignals (4) und eines gefilterten Filtersignals (5) aus der physikalischen Größe, insbesondere aus dem Messsignal (1),
- Anwendung eines Hüllkurvendemodulators (14) auf das Referenzsignal (4) und das gefilterte Filtersignal (5) zur Erzeugung eines Hüllkurvenreferenzsignals (15) und eines Hüllkurvenfiltersignals (16),
- Erzeugung zumindest eines ersten Vergleichswertes (17) durch Vergleich des Hüllkurvenreferenzsignals (15) und des Hüllkurvenfiltersignals (16),
- Erkennen von Schwingungen durch diesen ersten Vergleichswert (17).

Weiterhin betrifft die Erfindung ein Erkennungssystem zur Erkennung von selbsterregten Schwingungen.

## Beschreibung

Die Erfindung betrifft ein Verfahren zur Erkennung von selbsterregten Schwingungen von trennenden, insbesondere spanenden Werkzeugmaschinen und/oder des Werkzeuges und/oder des durch die Werkzeugmaschine bearbeiteten Werkstücks. Zudem betrifft die Erfindung ein Erkennungssystem zur Erkennung von selbsterregten Schwingungen.

Bei Maschinen wie z. B. Werkzeugmaschinen, Produktionsmaschinen und/oder bei Robotern treten während eines Bearbeitungsvorgangs durch den Bearbeitungsvorgang oder durch eine Störung erzeugte Schwingungen an Maschinenelementen und/oder an dem zur Bearbeitung eingesetzten Werkzeuges und/oder an einem zu bearbeitenden Werkstück der Maschine auf. Insbesondere bei Werkzeugmaschinen treten z. B. bei spanabhebenden Bearbeitungsvorgängen wie z. B. Drehen oder Fräsen so genannte Ratterschwingungen auf, die die Güte des Bearbeitungsvorgangs und die erzielbare Schnitttiefe (Zustellung ins zu bearbeitende Material) herabsetzen.

Ratterschwingungen bezeichnen einen instabilen Prozesszustand des Bearbeitungsprozesses, indem eine Schwingung und die dadurch entstehenden Wechselkräfte sich selbst erregen. Bei der spanenden Bearbeitung stellen Rat-terschwingungen neben der zur Verfügung stehenden Leistung der Hauptspindel eine Grenze zum erreichbaren Spanvolumen dar. Rattern beeinträchtigt die Oberflächengüte des bearbeiteten Werkstücks, mindert die Standzeit des Werk-zeuges und schädigt Lager und Führungen der Maschine. Im Extremfall kommt es zum Bruch der Werkzeugschneide oder des Werkzeuges.

Rattern führt daher somit zu Ausschuss. Oftmals liegt die Ursache für Rattern in der mechanischen Nachgiebigkeit der Maschinenstruktur gegenüber den Schnittkräften. In höheren Frequenzbereichen kann zudem die Nachgiebigkeit des Werkzeugs, der Werkzeughalterung sowie der Hauptspindellagerung gegenüber den Schnittkräften zum Rattern führen. Zur Unterdrückung von Ratterschwingungen und zur Stabilisierung des Prozesses sind verschiedene Ansätze bekannt. Dies sind zum einen die Änderung der Drehzahl der Hauptspindel sowie die Modulation der Drehzahl der Hauptspindel als auch die Reduzierung der Schnitttiefe.

Eine erste Aufgabe der Erfindung ist es, ein Verfahren anzugeben, mit welchem man die auftretenden Schwingungen während eines trennenden Bearbeitungsprozesses erkennen kann. Eine zweite Aufgabe liegt in der Angabe eines Erkennungssystems, mit welchem man die auftretenden Schwingungen während eines trennenden Bearbeitungsprozesses erkennen kann und in welchem sich insbesondere das erfindungsgemäße Verfahren durchführen lässt.

Die auf das Verfahren bezogene Aufgabe wird gelöst durch die Angabe eines Verfahrens zur Erkennung von selbsterregten Schwingungen von trennenden, insbesondere spanenden Werkzeugmaschinen und/oder des Werkzeuges und/oder des durch die Werkzeugmaschine bearbeiteten Werkstücks mit folgenden Schritten:
- Erfassen eines bei der Bearbeitung des Werkstücks durch die Werkzeugmaschine auftretenden physikalischen Größe, insbesondere eines Messsig-nals,
- Bildung eines Referenzsignals und eines gefilter-ten Filtersignals aus der physikalischen Größe, insbesondere aus dem Messsignal,
- Anwendung eines Hüllkurvendemodulators auf das Referenzsignal und das gefilterte Filtersignal zur Erzeugung eines Hüllkurvenreferenzsignals und eines Hüllkurvenfiltersignals,
- Erzeugung zumindest eines ersten Vergleichswertes durch Vergleich des Hüllkurvenreferenzsignals und des Hüllkurvenfiltersignals,
- Erkennen von Schwingungen durch diesen ersten Vergleichswert.

Die auf das Erkennungssystem bezogene Aufgabe wird gelöst durch die Angabe eines Erkennungssystems zur Erkennung von selbsterregten Schwingungen umfassend eine trennende, insbesondere spanende Werkzeugmaschinen und/oder des zur Bearbeitung benutzten Werkzeuges und/oder eines die Werkzeugmaschine bearbeiteten Werkstücks, wobei:
- Sensoren zur Erfassen einer bei der Bearbeitung des Werkstücks durch die Werkzeugmaschine auftretenden physikalischen Größe, insbesondere eines Messsignals und/oder eine Berechnungseinheit für einen antriebs- oder steuerungsinternen, für die Bearbeitung relevanten Signals zur Erzeugung einer physikalischen Größe, insbesondere eines Messsignals vorgesehen sind,
- Eine erste Recheneinheit zur Bildung eines Referenzsignals und eines gefilterten Filtersignals aus der physikalischen Größe, insbesondere des Messsignals vorgesehen ist,
- Ein Hüllkurvendemodulator zur Erzeugen eines Hüllkurvenreferenzsignals und eines Hüllkurvenfiltersignals aus dem Referenzsignal und dem gefilterten Filtersignals vorgesehen ist,
- Eine zweite Recheneinheit zur Erzeugung zumindest eines ersten Vergleichswertes durch Vergleich des Hüllkurvenreferenzsignals und des Hüllkurvenfiltersignals vorgesehen ist, so dass durch diesen ersten Vergleichswert Schwingungen erkennbar sind.

Zur Erkennung von Ratterschwingungen ist zunächst eine physikalische Größe, nachfolgend als Messsignal bezeichnet, vorgesehen, in dem die genannten Schwingungen gut zu erkennen sind.

Erfindungsgemäß wurde erkannt, dass es eine wesentliche Eigenschaft von Rattern ist, dass die Frequenz von Ratterschwingungen aus physikalischen Gründen nie mit der Spindeldrehfrequenz oder deren Harmonischen zusammenfallen kann.

Die Prozessstabilität wird anhand eines aus dem Messsignal abgeleiteten Kriteriums in Echtzeit entschieden. Die Generierung dieses Kriteriums erfolgt in drei Schritten: dem Anwenden von Filtern auf das Messsignal, der Erzeugung der Hüllkurve und der Erzeugung der zur Bewertung verwendeten Größe. Das erfindungsgemäße Verfahren und das Erkennungssystem erzeugen eine Größe, die eine eindeutige Aussage über den Stabilitätszustand des Bearbeitungsprozesses liefert. Die Erfindung erfordert vorteilhafterweise keine aufwändige Signalbearbeitung wie z.B. die Berechnung einer Fourier-Transformation (FFT). Ein auf die Erfindung bezogenes Ersatzschaltbild besteht vorteilhafterweise ausschließlich aus einfachen linearen Gliedern und kann daher auf sehr einfache Weise umgesetzt werden. Das Verfahren und das Erkennungssystem erweist eine hohe Robustheit gegenüber nicht signifikanten parasitären Frequenzen auf.

Es wird nur dann ein instabiler Zustand erkannt, wenn die mit diesem Zustand verbundenen (signifikanten)Frequenzanteile in der Amplitude dominant sind. Bleibt die Amplitude eines Frequenzanteils geringer als die Amplitude des der Spindeldrehzahl entsprechenden Anteils oder deren Harmonischen, wird kein instabiler Zustand erkannt.

In den Unteransprüchen sind weitere vorteilhafte Maßnahmen aufgelistet, die beliebig miteinander kombiniert werden können, um weitere Vorteile zu erzielen.

Zunächst werden aus der physikalischen Größe, d.h. hier dem Messsignal zwei Signale, nämlich ein Referenzsignal und ein gefiltertes Filtersignal generiert. Zunächst wird daher ein Hochpassfilter auf das Signal angewandt. Das erste Signal aus dem hochpassgefilterten Messsignal erzeugte Signal wird im Weiteren "Referenzsignal" genannt. Ziel hier ist das (Heraus)-Filtern des Gleichanteils aus dem Messsignal. D.h. zur Bildung des Referenzsignals ist ein Hochpassfilter vorgesehen, mit welchem ein Gleichanteil des Messsignals aus dem Messsignal entfernbar ist.

In vorteilhafter Weise wird die Bildung eines gefilterten Filtersignals aus dem Messsignal mittels eines Filters vorgenommen, wodurch die Drehfrequenz des Werkstücks und/oder des Werkzeugs, sowie deren Harmonische, aus dem Messsignal herausgefiltert werden. Das Ziel hier ist, aus dem Messsignal alle bekannten Frequenzanteile herauszufiltern. Ggf. werden auch Frequenzen bekannter Einflüsse externer Aggregate wie z.B. von Pumpen oder von pneumatischen Anlagen entfernt.

In besonderer Ausgestaltung ist das Filter als ein Filter mit abstandsgleichen Nullstellen, insbesondere ein Filter mit endlicher Impulsantwort (finite impulse response filter, FIR-Filter) ausgestaltet. Zum Filtern der bei der Drehfrequenz des Werkstücks und/oder des Werkzeugs und deren Vielfachen kann beispielsweise ein Filter mit abstandsgleichen Nullstellen eingesetzt werden. Dieses Verhalten kann mit Hilfe eines FIR-Filters auf sehr einfache Weise erreicht werden. Ein solches Verhalten kann beispielsweise durch die Bildung des Mittelwerts des unveränderten Eingangssignals und des verzögerten, mit gedrehtem Vorzeichen Eingangssignals erlangt werden. Die eingesetzte Totzeit für die Verzögerung entspricht genau der Periode der der ersten Nullstelle entsprechenden Frequenz.

Bevorzugt ist/sind zusätzlich zum Filter ein oder mehrere Bandsperrfilter vorgesehen, die vor oder nach dem Filter geschaltet sind. D.h. dass der FIR-Filter mit einem oder mehreren Bandsperrfilter ergänzt werden kann, um weitere diskrete parasitäre Frequenzen aus externen Aggregaten zu filtern.

In einer bevorzugten Ausgestaltung weist der Hüllkurvendemodulator einen Gleichrichter oder eine Betragsbildung und einen dem Gleichrichter nachgeschalteten Tiefpassfilter auf. Die Bildung der Hüllkurve kann auf verschiedenste Art und Weise erfolgen. Beispielsweise kann die Bildung der Hüllkurve durch Gleichrichtung oder Betragsbildung gefolgt von Glättung, bzw. durch Tiefpassfiltern des Signals erfolgen.

In einem bevorzugten Ausführungsbeispiel ist der erste Vergleichswert als ein Verhältniswert ausgestaltet, welcher durch das Verhältnis des Betrags des Hüllkurvenreferenzsignals und des Betrags des Hüllkurvenfiltersignals gegeben ist. Das bedeutet, dass das Verhältnis beider Hüllkurven verwendet wird, um eine Aussage über den Zustand des Prozesses zu treffen.

Insbesondere liegt ein Fehlen von Schwingungen vor, wenn der Betrag des Hüllkurvenreferenzsignals wesentlich höher ist als der Betrag des Hüllkurvenfiltersignals, so dass der Verhältniswert über Eins, insbesondere weit über Eins ist. Wenn keine Schwingungen, insbesondere Ratterschwingungen auftreten, sind die dominanten Frequenzanteile diejenigen, die mit Hilfe z.B. des FIR-Filters herausgefiltert werden und bei der Drehfrequenz der Hauptspindel und deren Harmonischen liegen. In dem Fall liegt der Betrag der Hüllkurve des gefilterten Signals wesentlich niedriger als der Betrag der Hüllkurve des Referenzsignals. Das Verhältnis beider Hüllkurve, also Referenzsignal geteilt durch Filtersignal, liegt also weit über Eins.

Dagegen ist beim Auftreten von Schwingungen, die nicht bei den gefilterten Frequenzen liegen, der Betrag des Hüllkurvenreferenzsignals im Wesentlichen gleich dem Betrag des Hüllkurvenfiltersignals, so dass der Verhältniswert nahezu Eins ist. D.h. beim Auftreten von Schwingungen, insbesondere Ratterschwingungen bilden diese Ratterschwingungen die dominanten Frequenzanteile. Da Ratterschwingungen per Definition nicht mit der Spindeldrehfrequenz oder deren Harmonischen zusammenfällt, hat das Filtern der Drehfrequenz und deren Harmonischen wenig Einfluss auf die Hüllkurve. In diesem Fall sind die Beträge beider Hüllkurven nahezu identisch und das Verhältnis liegt bei Eins.

Bevorzugt ist als ein zweiter Vergleichswert ein Referenzwert ausgestaltet, welcher durch einen Vergleich des Betrags des Hüllkurvenfiltersignals mit einem vorgegeben Referenzwert gegeben ist. Der Betrag des Hüllkurvenfiltersignals wird verwendet, um zu erkennen, ob das Werkzeug im Eingriff ist oder nicht. D.h. dass aus der Amplitude der Hüllkurve des gefilterten Signals abgeleitet werden kann, ob das Werkzeug im Eingriff ist oder nicht. Dafür wird der Betrag der Hüllkurve mit einem vordefi-nierten Schwellwert verglichen.

In bevorzugter Ausgestaltung sind die Schwingungen Ratterschwingungen.

In bevorzugter Ausgestaltung ist eine, zumindest eine Hauptspindel umfassende Arbeitsmaschine vorgesehen. Als physikalische Größe bzw. Messsignale können der Schalldruck, insbesondere der Schalldruck innerhalb eines die Arbeitsmaschine umfassenden Arbeitsraums verwendet werden. Zudem oder alternativ kann die Beschleunigung an einem beliebigen Punkt der Arbeitsmaschine, d.h. die Beschleunigung an einem beliebigen Punkt der Maschinenstruktur verwendet werden. Auch kann ein beliebiges Antriebssignal wie z.B. der momentbildende Strom- oder Drehzahlistwert verwendet werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: Generierung der für das Verfahren und Erkennungssystem notwendigen Größen,
- FIG 2:: Blockschaltbild der Implementierung des FIR-Fil ters,
- FIG 3:: Beispiel für das Übertragungsverhalten einer gebrochenen Totzeit,
- FIG 4:: Übertragungsverhalten des FIR-Filters mit Grundfrequenz 20 Hz,
- FIG 5:: Referenzsignal und gefiltertes Signal,
- FIG 6:: Blockdiagramm für das Filtern des Messsignals und Erzeugung der Hüllkurven,
- FIG 7:: Hüllkurven vom Referenzsignal und gefiltertem Signal,
- FIG 8:: Blockschaltbild des Verfahrens,
- FIG 9:: Anwendung des Verfahrens und des Erkennungssystems auf ein Messsignal.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Die Erfindung wird am Beispiel einer Werkzeugmaschine mit mindestens einer Spindel für den zerspanenden Prozess erläutert. Bei der spanenden Bearbeitung stellen Ratterschwingungen ein großes Problem dar. Es ist zu beachten, dass die Erfindung jedoch nicht auf dieses Beispiel beschränkt ist.

Zunächst ist zur Erkennung von Ratterschwingungen das Messsignal 1 zu bestimmen, in dem die genannten Schwingungen gut zu erkennen sind. Für das erfindungsgemäße Verfahren und das erfindungsgemäße Erkennungssystem können verschiedene Signale verwendet werden, wie zum Beispiel: der Schalldruck z.B. innerhalb des Arbeitsraums der Maschine, die Beschleunigung an einem beliebigen Punkt der Maschinenstruktur oder ein beliebiges Antriebssignal wie z.B. der momentbildende Strom- oder Drehzahlistwert der Spindel oder einer beliebige Achse. Die Messsignale 1 können durch ein oder mehrere geeignete Sensoren erfasst werden.

Erfindungsgemäß wird nun ein Verfahren und ein Erkennungssystem beschrieben, wie aus diesem Signal ein Kriterium, d.h. mehrere Schritte für das Vorkommen von Ratterschwingungen abgeleitet werden. Die Prozessstabilität wird daher erfindungsgemäß anhand mehrerer aus einem geeigneten Messsignal 1 abgeleiteten Schritten in Echtzeit entschieden: nämlich dem Anwenden von Filtern auf das Messsignal 1, der Erzeugung einer Hüllkurve und der Erzeugung der zur Bewertung verwendeten Größe.

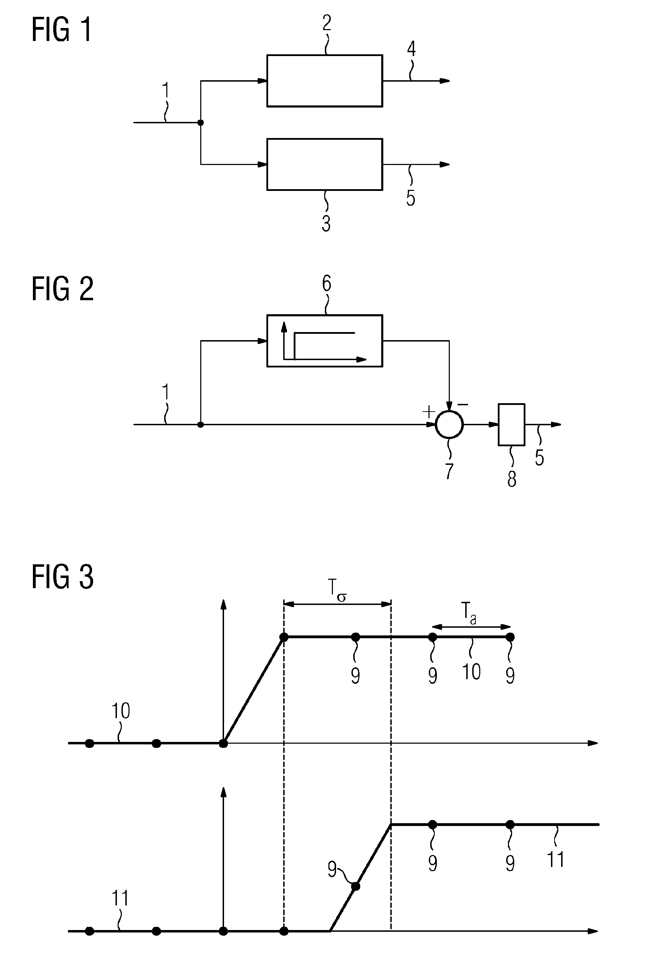

FIG 1 zeigt zunächst das Filtern. Dabei werden aus dem Messsignal 1 zwei Signale generiert: ein Referenzsignal 4 und ein gefiltertes Filtersignal 5. Das Referenzsignal 4 wird aus dem hochpassgefilterten Messsignal 1 erzeugt. Als Hochpassfilter 2 kann beispielsweise ein diskreter Filter der zweiten Ordnung eingesetzt werden. Ziel dieses Zweigs ist das Filtern des Gleichanteils aus dem Messsignal 1. Dafür kann ein beliebiger Hochpassfilter 2 eingesetzt wer-den. Das zweite Signal ergibt sich aus dem Messsignal 1, nachdem davon die bei der Spindeldrehfrequenz und deren Vielfachen liegenden Frequenzanteile entfernt wurden. Dieses Signal wird nachfolgend als "gefiltertes Filtersignal 5" bezeichnet. Das Ziel hierbei ist, aus dem Messsignal 1 alle bekannten Frequenzanteile herauszufiltern. Ggf. werden auch Frequenzen bekannter Einflüsse externer Aggregate wie z.B. von Pumpen oder von pneumatischen Anlagen entfernt.

Zum Filtern der nahe der Spindelfrequenz und deren Vielfachen liegenden Frequenzanteile kann beispielsweise ein Filter mit abstandsgleichen Nullstellen eingesetzt werden. Dieses Verhalten kann mit Hilfe eines FIR-Filters 3 auf einfache Weise erreicht werden.

Das Prinzip des hier verwendeten FIR-Filters 3 wird in FIG 2 dargestellt. Dabei wird das Messsignal durch ein Verzögerungselement 6, der gebrochenen Totzeit Tσ (FIG 3), verzögert. Wird ein beliebiges Signal mit einer zeitverzögerten Kopie desselben "gemischt" (additiv überlagert), entsteht ein kammgefiltertes Signal. Frequenzen, deren Periodendauer oder Vielfache davon der Verzögerungszeit entspricht, löschen sich aus (destruktive Interferenz), während man bei den genau dazwischen liegenden Frequenzen die doppelte Signalamplitude erhält (konstruktive Interferenz).

Bei der gebrochenen Totzeit Tσ (FIG 3) wird ein beliebiges Eingangssignal, z.B. d.h. das Messsignal 1 um eine Zeit verzögert, die kein Vielfaches der Abtastzeit Ta ist. Hier entspricht die Totzeit Tσ (FIG 3), womit das Messsignal 1 verzögert wird, der Zeit für eine Spindelumdrehung, d. h. dem Kehrwert der Spindeldrehzahl. Diese wird anschließend mittels eines Subtrahierers 7 vom durchlaufenden Messsignal 1 subtrahiert. Wird jedoch ein sinusförmiges Signal mit einer Frequenz, die beispielsweise genau 1,5 x der Spindeldrehzahl entspricht verwendet, so erhält man nach dem Subtrahierer 7 ein Signal mit der doppelten Amplitude. Um das zu vermeiden, wird das nach dem Subtrahierer 7 erhaltene Signal mit einem Faktorisierer 8 beaufschlagt.

FIG 3 zeigt am vereinfachten Beispiel eines abgetasteten Rechtecksignals als Eingangssignals 10 das Übertragungsverhalten einer gebrochenen Totzeit Tσ mittels eines Verzögerungselements 6 (FIG 2). Dabei ist im oberen Teil der FIG 3 ein Eingangssignal 10 an verschiedenen Abtastpunkten 9 zwischen einer Abtastzeit Ta über einer Zeit t gezeigt. Im unteren Teil der FIG 3 wird der sich aus dem mit der Totzeit Tσ verzögerten Eingangssignal 10 ergebende Ausgangssignal 11 gezeigt.

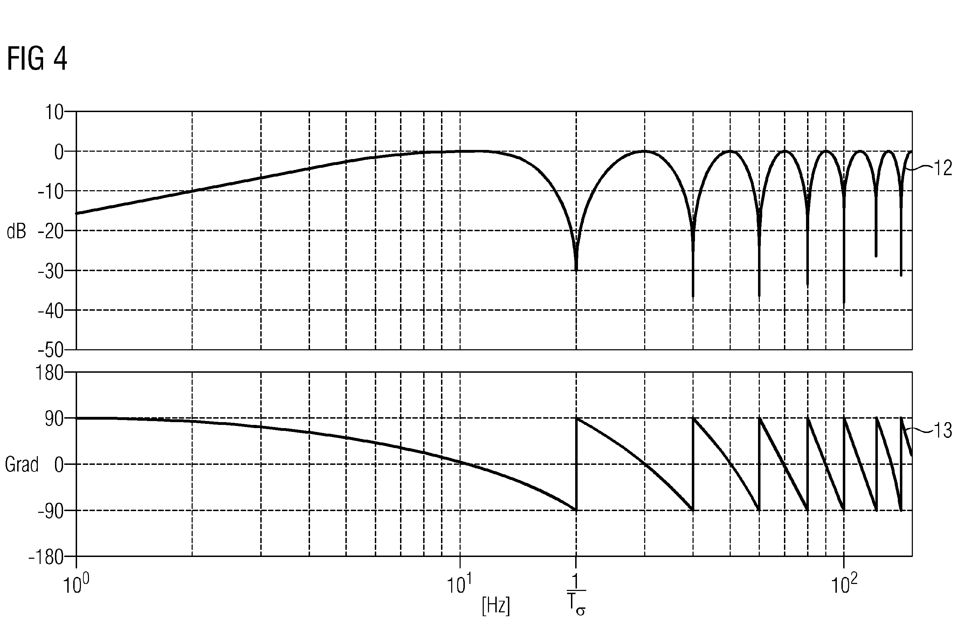

FIG 4 zeigt das Übertragungsverhalten mit abstandsgleichen Nullstellen mit der Grundfrequenz 20Hz eines FIR-Filters 3 (FIG 1) in einem Bode-Diagramm. Für die Parametrierung wurde eine beispielhafte Grundfrequenz von 20Hz gewählt, was einer Totzeit Tσ von 50ms entspricht. Man erkennt die erste, nicht statische (bei Frequenz 0Hz) Nullstelle des Filters bei der Grundfrequenz 20Hz und allen Vielfachen, inklusive die Harmonische der Ordnung 0, d. h. der Gleichanteil.

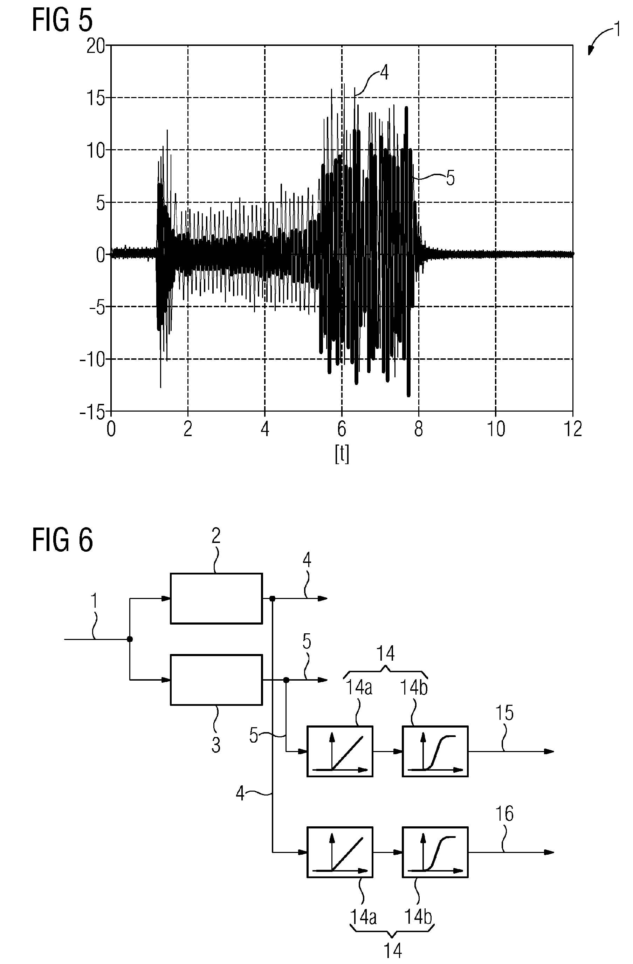

FIG 5 zeigt nun das Referenzsignal 4, das mittels einen Hochpassfilters 2 (FIG 1) erstellt wurde, sowie das mit dem FIR-Filter 3 (FIG 1) gefilterten Filtersignal 5, aus welchem die nahe der Spindelfrequenz und deren Vielfachen liegenden Frequenzanteile gefiltert wurden. Dabei wurde als Messsignal 1 (FIG 1) der Schalldruck verwendet. Ggf. kann der FIR-Filter mit einem oder mehreren Bandsperrfilter ergänzt werden, um weitere diskrete parasitäre Frequenzen aus externen Aggregaten zu filtern.

Anschließend wird ein Hüllkurvendemodulator 14 auf das Referenzsignal 4 und das gefilterte Filtersignal 5 zur Erzeugung eines Hüllkurvenreferenzsignals 15 und eines Hüllkurvenfiltersignals 16 angewendet. FIG 6 zeigt das Blockdiagramm für das Filtern des Messsignals 1 und die Erzeugung der Hüllkurven.

Die Bildung der Hüllkurven kann durch den Hüllkurvendemodulator 14 auf verschiedenste Art und Weise erfolgen. Beispielsweise kann die Bildung der Hüllkurve durch Gleichrichtung 14a oder Betragsbildung (nicht gezeigt) gefolgt von Glättung 14b bzw. Tiefpassfiltern des gefilterten Filtersignals 5 bzw. des Referenzsignals 4, erfolgen. D.h. zur Bildung der Hüllkurven erfolgt eine Gleichrichtung 14a oder Betragsbildung (nicht gezeigt) des Referenzsignals 4 und des gefilterten Filtersignals 5 mit anschließender Glättung durch einen Tiefpassfilter 14b.

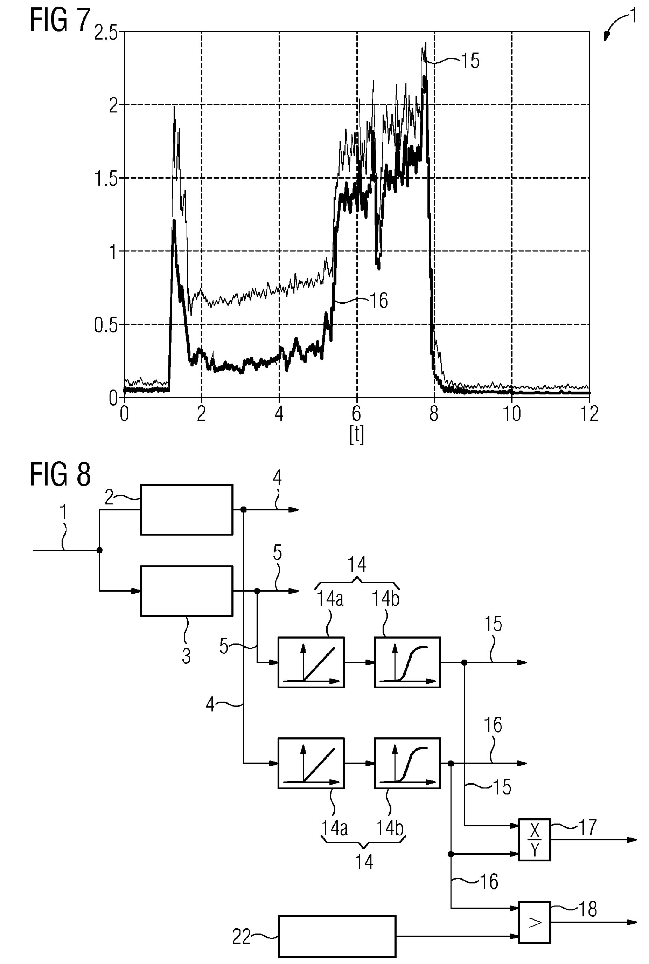

FIG 7 zeigt die Hüllkurven vom Referenzsignal 4, d.h. das Hüllkurvenreferenzsignals 15 und vom gefiltertem Filtersignal 5, d.h. das Hüllkurvenfiltersignals 16 am Beispiel aus FIG 5. Hierbei ist wieder als Messsignal 1 (FIG 1) der Schalldruck verwendet worden.

Das Verhältnis beider Hüllkurven, d.h. des Hüllkurvenreferenzsignals 15 und des Hüllkurvenfiltersignals 16 wird verwendet, um eine Aussage über den Zustand des Prozesses zu treffen. Dazu ist ein erster Vergleichswert als ein Verhältniswert 17 ausgestaltet, welcher durch das Verhältnis des Betrags des Hüllkurvenreferenzsignals 15 und des Betrags des Hüllkurvenfiltersignals 16 gegeben ist, FIG 8. Hierbei können zwei Fälle vorkommen:

Im ersten Fall treten keine Ratterschwingungen auf. Die dominanten Frequenzanteile sind diejenigen, die mit Hilfe des FIR-Filters 3 herausgefiltert werden und liegen bei der Drehfrequenz der Hauptspindel und deren Harmonischen. In dem Fall liegt der Betrag des Hüllkurvenfiltersignals 16 des gefilterten Filtersignals wesentlich niedriger als der Betrag des Hüllkurvenreferenzsignals 15 des Referenzsignals 4. Das Verhältnis beider Hüllkurven liegt also weit über 1.

Im zweiten Fall treten Ratterschwingungen auf. Hier bilden die Ratterschwingungen die dominanten Frequenzanteile und das Filtern der Drehfrequenz und deren Harmonischen hat wenig Einfluss auf die Hüllkurven. In diesem Fall sind die Beträge beider Hüllkurven nahezu identisch und das Verhältnis liegt bei Eins.

Zudem wird ein zweiter Vergleichswert als ein Referenzwert 18 gebildet, welcher durch einen Vergleich des Betrag des Hüllkurvenfiltersignals 16 mit einem vorgegeben Schwellwert 22 gegeben ist. So kann aus der Amplitude der Hüllkurve des gefilterten Filtersignals 3 abgeleitet werden, ob das Werkzeug im Eingriff ist oder nicht. Der Betrag der Hüllkurve wird daher verwendet, um zu erkennen, ob das Werkzeug im Eingriff ist oder nicht. Dafür wird der Betrag der Hüllkurve mit einem vordefinierten Schwellwert 22 verglichen.

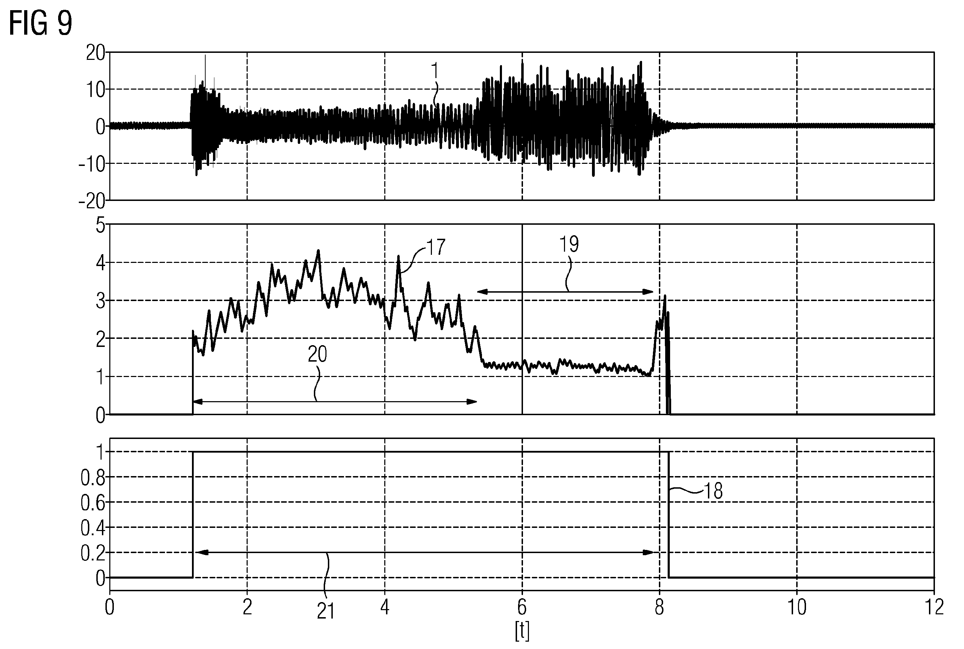

FIG 9 zeigt die Anwendung des Verfahrens und des Erkennungssystems auf das Messsignal 1 (Schalldruck). Hier ist im oberen Abschnitt das Messsignal 1 unverfälscht angezeigt. Im mittleren Abschnitt ist der Vergleichswert 17 angezeigt. Hier ist zu erkennen, dass am Zeitabschnitt 20 kein Rattern bzw. keine Ratterschwingungen, im Zeitabschnitt 19 Ratterschwingungen vorhanden sind. Im unteren Abschnitt ist der Referenzwert 19 zu erkennen. Im Zeitabschnitt 21 ist das Werkzeug im Eingriff.

## Patentansprüche

1. Verfahren zur Erkennung von selbsterregten Schwingungen von trennenden, insbesondere spanenden Werkzeugmaschinen und/oder des Werkzeuges und/oder des durch die Werkzeugmaschine bearbeiteten Werkstücks
**gekennzeichnet durch** folgende Schritte:
- Erfassen eines bei der Bearbeitung des Werkstücks **durch** die Werkzeugmaschine auftretenden physikalischen Größe, insbesondere eines Messsignals (1),
- Bildung eines Referenzsignals (4) und eines gefilterten Filtersignals (5) aus der physikalischen Größe, insbesondere dem Messsignal (1),
- Anwendung eines Hüllkurvendemodulators (14) auf das Referenzsignal (4) und das gefilterte Filtersignal (5) zur Erzeugung eines Hüllkurvenreferenzsignals (15) und eines Hüllkurvenfiltersignals (16),
- Erzeugung zumindest eines ersten Vergleichswertes (17) **durch** Vergleich des Hüllkurvenreferenzsignals (15) und des Hüll-kurvenfiltersignals (16),
- Erkennen von Schwingungen **durch** diesen ersten Vergleichswert (17).

2. Verfahren zur Erkennung von selbsterregten Schwingungen nach Anspruch 1,
**dadurch gekennzeichnet, dass** die Bildung eines Referenzsignals (4) mittels ein Hochpassfilter (2) vorgenommen wird, indem ein Gleichanteil der physikalische Größe, insbesondere des Messsignals (1) aus der physikalischen Größe, insbesondere dem Messsignal (1) entfernt wird.

3. Verfahren zur Erkennung von selbsterregten Schwingungen nach Anspruch 1 oder 2,
**dadurch gekennzeichnet, dass** die Bildung eines gefilterten Filtersignals (5) aus der physikalische Größe, insbesondere dem Messsignal (1) mittels eines Filters vorgenommen wird, indem alle bekannten Frequenzanteile, aus der physikalischen Größe, insbesondere dem Messsignal (1) herausgefiltert werden.

4. Verfahren zur Erkennung von selbsterregten Schwingungen nach Anspruch 3,
**dadurch gekennzeichnet, dass** aus der physikalischen Größe, insbesondere dem Messsignal (1), die bei einer Drehfrequenz des Werkzeugs und/oder Werkstücks liegende Frequenzen und deren Harmonischen, gefiltert werden.

5. Erkennungssystem zur Erkennung von selbsterregten Schwingungen umfassend eine trennende, insbesondere spanende Werkzeugmaschine und/oder des zur Bearbeitung benutzten Werkzeuges und/oder eines die Werkzeugmaschine bearbeiteten Werkstücks
**dadurch gekennzeichnet, dass**:
- Sensoren zur Erfassen eines bei der Bearbeitung des Werkstücks durch die Werkzeugmaschine auftretenden physikalischen Größe, insbesondere eines Messsignals (1) und/oder eine Berechnungseinheit für einen antriebs- oder steuerungsinternen, für die Bearbeitung relevanten Signals zur Erzeugung einer physikalischen Größe, insbesondere eines Messsignals (1) vorgesehen sind,
- Eine erste Recheneinheit zur Bildung eines Referenzsignals (4) und eines gefilterten Filtersignals (5) aus der physikalischen Größe, insbesondere dem auftretenden Messsignals (1) vorgesehen ist,
- Ein Hüllkurvendemodulator (14) zur Erzeugen eines Hüllkurvenreferenzsignals (15) und eines Hüllkurvenfiltersignals (16) aus dem Referenzsignal (4) und dem gefilterten Filtersignals (5) vorgesehen ist,
- Eine zweite Recheneinheit zur Erzeugung zumindest eines ersten Vergleichswertes (17) durch Vergleich des Hüllkurvenreferenzsignals (15) und des Hüllkurvenfiltersignals (16) vorgesehen ist, so dass durch diesen ersten Vergleichswert (17) Schwingungen erkennbar sind.

6. Erkennungssystem zur Erkennung von selbsterregten Schwingungen nach Anspruch 5,
**dadurch gekennzeichnet, dass** zur Bildung des Referenzsignals (4) ein Hochpassfilter (2) vorgesehen ist, durch welchen ein Gleichanteil der physikalischen Größe, insbesondere des Messsignals (1) aus der physikalischen Größe, insbesondere dem Messsignal (1) entfernbar ist.

7. Erkennungssystem zur Erkennung von selbsterregten Schwingungen nach Anspruch 5 oder 6,
**dadurch gekennzeichnet, dass** zur Bildung des gefilterten Filtersignals (5) aus der physikalischen Größe, insbesondere dem Messsignal (1) ein Filter vorgesehen ist, durch welchen alle bekannten, prozessbezogene Frequenzen, aus der physikalischen Größe, insbesondere dem Messsignal (1) herausfilterbar sind.

8. Erkennungssystem zur Erkennung von selbsterregten Schwingungen nach Anspruch 5, 6 oder 7,
**dadurch gekennzeichnet, dass** zur Bildung des gefilterten Filtersignals (5) aus der physikalischen Größe, insbesondere dem Messsignal (1) die bei der Drehfrequenz des Werkzeugs und/oder Werkstücks liegende oder zur Drehfrequenz des Werkzeugs und/oder Werkstücks proportionale Frequenz und deren Harmonischen herausgefiltert werden.

9. Erkennungssystem zur Erkennung von selbsterregten Schwingungen nach einem der Ansprüche 7-8,
**dadurch gekennzeichnet, dass** der Filter als ein Filter mit abstandsgleichen Nullstellen, insbesondere ein Filter mit endlicher Impulsantwort (3) (finite impulse response filter, FIR-Filter) ausgestaltet ist.

10. Erkennungssystem zur Erkennung von selbsterregten Schwingungen nach einem der vorhergehenden Ansprüche 7-9,
**dadurch gekennzeichnet, dass** zusätzlich zum Filter ein oder mehrere Bandsperrfilter vorgesehen ist, die vor oder nach dem Filter geschaltet sind.

11. Erkennungssystem zur Erkennung von selbsterregten Schwingungen nach einem der vorhergehenden Ansprüche 5 - 10,
**dadurch gekennzeichnet, dass** der Hüllkurvendemodulator (14) einen Gleichrichter (14a) und einen dem Gleichrichter (14a) nachgeschalteten Tiefpassfilter (14b) aufweist.

12. Erkennungssystem zur Erkennung von Schwingungen nach einem der vorhergehenden Ansprüche 5 - 10,
**dadurch gekennzeichnet, dass** der Hüllkurvendemodulator (14) eine Betragsbildung und einem der Betragsbildung nachgeschalteten Tiefpassfilter aufweist.

13. Erkennungssystem zur Erkennung von selbsterregten Schwingungen nach einem der vorhergehenden Ansprüche 5 - 12,
**dadurch gekennzeichnet, dass** ein erster Vergleichswert als ein Verhältniswert (17) ausgestaltet ist, welcher durch das Verhältnis des Betrags des Hüllkurvenreferenzsignals (15) und des Betrags des Hüllkurvenfiltersignals (16) gegeben ist.

14. Erkennungssystem zur Erkennung von selbsterregten Schwingungen nach Anspruch 13,
**dadurch gekennzeichnet, dass** beim Fehlen von Schwingungen der Betrag des Hüllkurvenreferenzsignal (15) wesentlich höher ist als der Betrag des Hüllkurvenfiltersignals (16), so dass der Verhältniswert (17) über Eins, insbesondere weit über Eins, ist.

15. Erkennungssystem zur Erkennung von selbsterregten Schwingungen nach Anspruch 13,
**dadurch gekennzeichnet, dass** beim Auftreten von Schwingungen der Betrag des Hüllkurvenreferenzsignals (15) im Wesentlichen gleich dem Betrag des Hüllkurvenfiltersignals (16) ist, so dass der Verhältniswert (17) im Bereich von Eins, insbesondere erkennbar um die Eins, ist.

16. Erkennungssystem zur Erkennung von selbsterregten Schwingungen nach einem der vorhergehenden Ansprüche 5-15,
**dadurch gekennzeichnet, dass** ein zweiter Vergleichswert als ein Referenzwert (18) ausgestaltet ist, welcher durch einen Vergleich des Betrags des Hüllkurvenfiltersignals (15) mit einem vorgegeben Schwellwert (22), insbesondere einem parametrisierbaren Schwellwert (22), gegeben ist.

17. Erkennungssystem zur Erkennung von selbsterregten Schwingungen nach einem der vorhergehenden Ansprüche 5-16,
**dadurch gekennzeichnet, dass** die Schwingungen Ratterschwingungen sind.

18. Erkennungssystem zur Erkennung von selbsterregten Schwingungen nach einem der vorhergehenden Ansprüche 5-17,
**dadurch gekennzeichnet, dass** eine zumindest eine Hauptspindel umfassende Arbeitsmaschine vorgesehen ist und dass als physikalische Größe (1) der Schalldruck, insbesondere der Schalldruck innerhalb eines die Arbeitsmaschine umfassenden Arbeitsraums und/oder die Beschleunigung an einem beliebigen Punkt der Arbeitsmaschine und/oder ein Antriebssignal vorgesehen ist.
